# FASCICULE DE BREVET EUROPEEN

(11) **EP 1 087 332 B1**
(45) Date de publication et mention de la délivrance du brevet: **13.02.2008**
(21) Numéro de dépôt: 00200642.7
(22) Date de dépôt: 25.02.2000
(51) Int. Cl.: G06K 19/07, G06K 17/00

(54) **Transpondeur destiné à plusieurs applications différentes**
Transponder für unterschiedliche Einsatzzwecke
Transponder constructed for several different applications

(30) Priorité: 22.09.1999 EP 99118661
(43) Date de publication de la demande: 28.03.2001
(73) Titulaire: EM Microelectronic-Marin SA, 2074 Marin (CH)
(72) Inventeur: Degrauwe, Marc, 2025 Chez-le-Bart (CH); Cérède, Gilles, 2000 Neuchâtel (CH); Roz, Thierry, 2515 Prêles (CH)
(74) Mandataire: Surmely, Gérard

(56) Documents cités:
- EP-A- 0 453 314
- EP-A- 0 670 556
- EP-A- 0 706 151

## Description

La présente invention concerne des transpondeurs associés à des systèmes d'identification ou de transactions de diverses natures. Plus particulièrement, la présente invention concerne un transpondeur destiné à plusieurs applications différentes.

Actuellement, un transpondeur est généralement destiné à une seule application spécifique, notamment pour des transactions bancaires, pour le paiement de certains services ou biens, ou encore pour la reconnaissance ou l'identification d'objets ou d'individus. Le transpondeur peut se présenter sous différentes formes, notamment sous forme de carte. Ainsi, il est proposé des cartes bancaires, des cartes téléphoniques et des cartes d'accès à certains bâtiments ou moyens de transport.

La multiplication des applications différentes engendre une multiplication des cartes ou transpondeurs qui encombrent l'utilisateur. En effet, ces cartes ou transpondeurs doivent généralement être portées par l'utilisateur lors de ses déplacements. C'est la raison pour laquelle il est proposé dans le cadre de la présente invention un transpondeur ou une carte destiné à plusieurs applications différentes. Par la suite, on utilisera seulement le terme de transpondeur défini comme un dispositif de communication sans contact avec un lecteur ou un émetteur, notamment une carte.

Cependant, un transpondeur multi-application est confronté à un problème de niveaux de sécurité différents pour les différentes applications. En effet, certaines applications, notamment celles liées aux transactions monétaires, nécessitent une haute sécurité. Par contre, d'autres applications ne nécessitent pas un tel niveau de sécurité. Un paramètre important intervenant dans la notion de sécurité d'un système à transpondeur est la distance de communication maximale entre un transpondeur et un lecteur du système. Ainsi, certaines applications sont implantées dans des systèmes permettant seulement une communication à courte, voire très courte distance, de manière à empêcher notamment qu'un récepteur étranger au système puisse recevoir les signaux électromagnétiques échangés entre le lecteur et le transpondeur. Par contre, d'autres applications, notamment dans le domaine de l'identification de personnes ou d'objets sont implantées dans des systèmes permettant une communication au moins à moyenne distance, c'est-à-dire supérieure à une dizaine de centimètres.

Etant donné que les transpondeurs connus de l'homme du métier, en particulier les transpondeurs de type passif, sont agencés avec une antenne associée à une unité électronique permettant une communication à une distance maximale prédéfinie pour une puissance déterminée du signal d'activation émis par le lecteur, l'homme du métier ne peut aisément fournir un transpondeur passif pour diverses applications nécessitant des distances de communication maximales différentes.

Le but de la présente invention est de pallier cet inconvénient majeur.

A cet effet, la présente invention concerne un transpondeur comprenant une antenne de communication et une unité électronique agencées de manière à gérer plusieurs applications différentes, caractérisé en ce qu'il comprend des moyens pour varier la distance de communication maximale avec un lecteur en fonction de l'application sélectionnée ou activée parmi lesdites applications différentes.

Dans un mode de réalisation préféré, les moyens pour varier la distance de communication maximale comprennent des moyens pour varier l'impédance équivalente de l'unité électronique du transpondeur.

Dans une variante de ce mode de réalisation, les moyens pour varier cette impédance équivalente comprennent des moyens pour varier la résistance équivalente de cette unité électronique de manière à varier le courant consommé par celle-ci et donc la charge.

La présente invention sera bien comprise à l'aide de la description suivante, faite en référence aux dessins annexés, donnés à titre d'exemples nullement limitatifs et dans lesquels :
- la figure 1 représente schématiquement un système de communication comprenant un lecteur et un transpondeur selon l'invention;
- la figure 2 représente schématiquement un premier mode de réalisation de l'invention;
- la figure 3a est un graphe représentant le comportement du courant maximal dans l'antenne d'un transpondeur passif en fonction de la distance le séparant d'un lecteur fournissant un signal électromagnétique d'activation;
- la figure 3b est un graphe représentant la courbe caractéristique de la tension fournie par le circuit d'alimentation du transpondeur en fonction de la charge de ce dernier;
- la figure 4 représente schématiquement une variante du premier mode de réalisation;
- les figures 5 et 6 représentent schématiquement et respectivement des deuxième et troisième modes de réalisation de l'invention;
- la figure 7 représente schématiquement la tension aux bornes d'une antenne d'un transpondeur passif en fonction de la fréquence du signal électromagnétique d'activation pour deux distances différentes et deux états différents du dispositif de la figure 6;
- la figure 8 représente schématiquement un quatrième mode de réalisation de l'invention, et
- la figure 9 représente schématiquement et partiellement un mode d'agencement préféré de l'unité électronique du transpondeur selon l'invention.

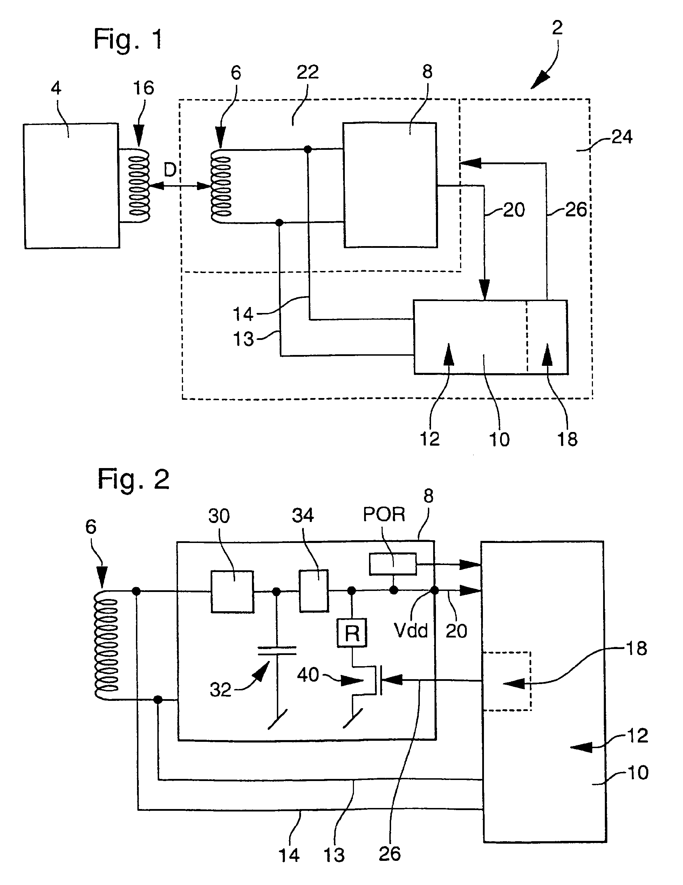

En se référant à la figure 1, on décrira ci-après le concept général de la présente invention dans le cas d'un transpondeur multi-application alimenté en mode passif. Le transpondeur passif 2 est destiné à plusieurs applications différentes et peut donc être associé à divers lecteurs ou émetteurs et en particulier au lecteur 4 représenté sur cette figure. Le transpondeur 2 comprend une antenne 6 reliée électriquement à un circuit d'alimentation 8 qui alimente le circuit électronique 10. Ce circuit 10 comprend une partie conventionnelle 12 réalisant notamment la communication avec le lecteur 4, au moyen d'une partie analogique de traitement des signaux reçus par l'antenne 6 via les liaisons électriques 13 et 14, et une partie propre à la présente invention formant un circuit logique 18 de gestion de la distance maximale de communication entre l'antenne 6 du transpondeur 2 et l'antenne 16 du lecteur 4. On notera ici que le lecteur 4 peut avoir plusieurs antennes et notamment deux antennes différentes pour l'émission et la réception de signaux électromagnétiques.

Le circuit électronique 10 qui comprend également le circuit logique de traitement des données nécessite une certaine tension minimum et un certain courant minimum d'alimentation pour fonctionner correctement. La tension et le courant d'alimentation sont fournis au circuit 10 par le circuit d'alimentation 8, schématisé par la liaison électrique 20. Afin de préciser la terminologie utilisée notamment dans les revendications jointes, on notera que l'ensemble des circuits électroniques, à la figure 1 des circuits 8 et 10, forment l'unité électronique du transpondeur 2 associée à l'antenne 6 de ce transpondeur. On peut fonctionnellement définir deux parties du transpondeur 2, à savoir une partie 22 comprenant l'antenne 6 et le circuit d'alimentation 8 et une partie 24 formée des autres circuits électroniques du transpondeur propre à la gestion de la communication et au traitement des données, chaque application prévue pour le transpondeur 2 étant implantée dans cette partie 24.

Tous les modes de réalisation décrits ci-après ont en commun le fait que le circuit logique 18 agit sur la partie 22 de manière à varier au moins une caractéristique électrique de cette partie en fonction de l'application sélectionnée ou activée parmi la pluralité d'applications prévues. En définissant le circuit d'alimentation 8 comme l'ensemble des éléments électroniques agencés entre l'antenne 6 et le circuit 10, l'action exercée par le circuit logique 18 sur la partie 22, schématisé par la liaison électrique 26, se résume soit à varier l'impédance équivalente du circuit 8 en fonction de l'application sélectionnée ou activée, soit de varier les caractéristiques propres de l'antenne 6.

A la figure 2 est représenté un premier mode de réalisation d'un transpondeur passif selon l'invention, les éléments décrits ci-avant ne seront pas à nouveau décrits en détails. Dans le circuit d'alimentation 8 est agencé de manière classique un redresseur-filtre 30, une capacité de stockage de l'énergie électrique 32, un régulateur de tension 34 et une unité de réinitialisation lors de la mise sous tension du circuit électronique 10, abrégée par la dénomination POR (de l'anglais "Power On Reset"). Le POR maintient le circuit 10 hors fonctionnement tant que la tension d'alimentation fournie par le circuit 8 est inférieure à un seuil de tension prédéfini assurant le fonctionnement normal du circuit 10.

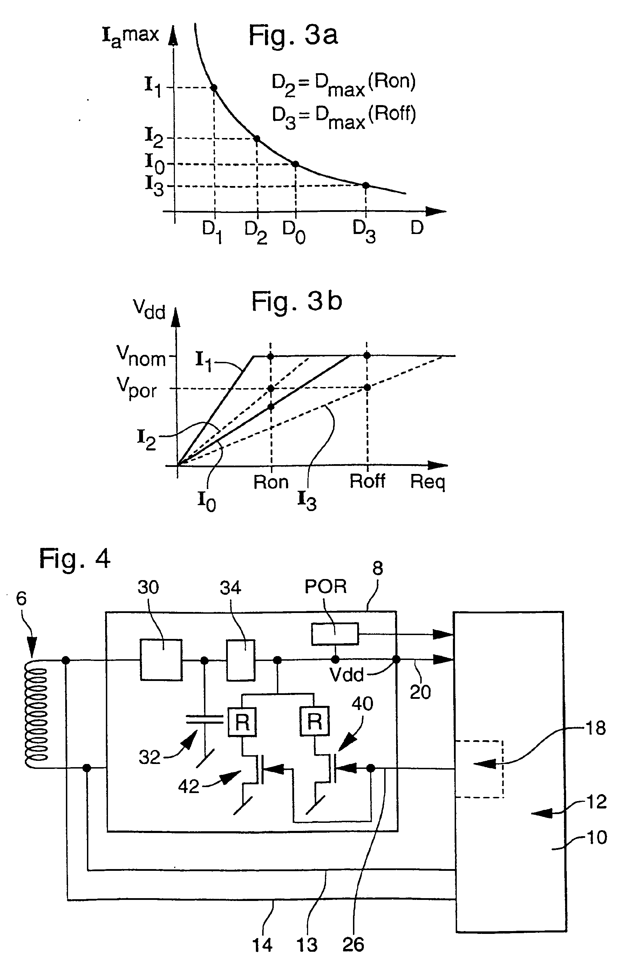

Selon l'invention, il est prévu en outre dans le circuit 8 une résistance R agencée en série avec un interrupteur 40, formé notamment par un transistor, dont l'ouverture et la fermeture est commandée par le circuit logique 18 de gestion de la distance maximale de communication. La résistance R et le transistor 40 sont agencés entre deux bornes du circuit 8 ayant des potentiels électriques différents, à savoir entre la borne positive Vdd de l'alimentation appliquée au circuit 10 et la masse. Selon que l'interrupteur 40 est ouvert ou fermé, la résistance équivalente de l'unité électronique, dans le présent cas du circuit d'alimentation 8, varie. La gestion de la distance de communication en fonction de l'ouverture et de la fermeture de l'interrupteur 40 par le circuit 18 est expliquée ci-après à l'aide des figures 3a et 3b.

A la figure 3a est représenté le courant d'antenne maximum Iₐ^{max} relativement à la distance D (voir figure 1) entre l'antenne 6 du transpondeur et un lecteur. Avec une augmentation de la distance D, le courant Iₐ^{max} diminue. Aux quatre distances D₀, D₁, D₂ et D₃ correspondent respectivement les courants maxima I₀, I₁, I₂ et I₃. Le circuit d'alimentation 8 peut être considéré comme une source de tension fournissant une tension nominale Vnom. A la figure 3b est représentée sur un graphe la tension haute Vdd fournie par le circuit d'alimentation 8 en fonction de la résistance équivalente Req de l'unité électronique du transpondeur formée par les circuits 8 et 10. Le dispositif POR présente un seuil de tension Vpor de mise en fonctionnement du circuit 10, c'est-à-dire que le circuit 10 est alimenté seulement au-dessus de la valeur de la tension d'alimentation Vdd supérieure à Vpor. Selon le comportement d'une source de tension, la tension fournie croît sensiblement linéairement dans une première plage ou la résistance équivalente Req est petite jusqu'à ce qu'elle atteigne la valeur nominale Vnom. La pente du segment linéaire sur la figure 3b dépend du courant maximal fourni par l'antenne Iₐ^{max}. Ainsi, comme cela ressort de cette figure 3b, pour une résistance équivalente Roff, à interrupteur 40 fermé, la distance de communication max est D₃ correspondant à une distance relativement élevée. A la résistance Roff, la tension Vdd est à Vnom pour les distances D₀, D₁ et D₂. Par contre, lorsque l'interrupteur 40 est ouvert, la résistance équivalente Req diminue à la valeur Ron. A cette valeur, on constate que la tension Vpor est atteinte pour des courants supérieurs ou égales à I₂ correspondant à des distances de communication inférieures à D₂ (voir figure 3a). La distance de communication maximale D₂ est relativement petite, c'est-à-dire nettement inférieure à D₃. A la moindre distance D₁, la tension d'alimentation Vdd est égale à Vnom alors qu'à la distance D₀ intermédiaire aux distances D₂ et D₃, la tension d'alimentation Vdd est inférieure à Vpor. On comprend donc que l'agencement selon l'invention de ce premier mode de réalisation permet de gérer de manière efficace la distance maximale de communication en fonction de l'application sélectionnée ou activée. Cette gestion sera décrite plus précisément par la suite.

A la figure 4 est représentée une variante de réalisation de la figure 2. Cette variante se distingue par le fait qu'il est prévu un agencement en parallèle de deux résistances R reliées respectivement en série à deux transistors 40 et 42 entre la masse et une borne de tension haute. Les deux interrupteurs 40 et 42 sont commandés par le circuit 18 de gestion de la distance maximale. Cette variante permet ainsi de définir trois distances maximales différentes pour des applications différentes. En effet, la résistance équivalente Req prend trois valeurs différentes selon que les interrupteurs 40 et 42 sont ON-ON, ON-OFF ou OFF-OFF. D'autres variantes équivalentes peuvent bien évidemment être prévues par l'homme du métier.

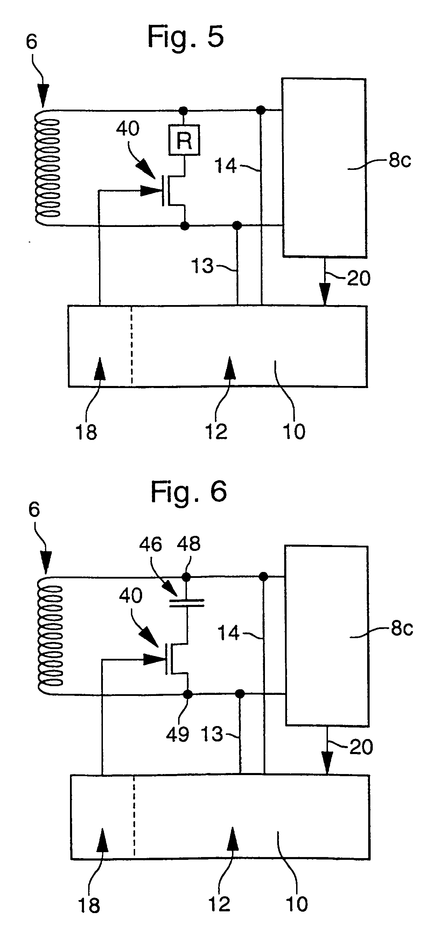

A la figure 5 est représenté un deuxième mode de réalisation d'un transpondeur passif selon l'invention. Les références déjà citées précédemment ne seront pas décrites ici en détail. Ce mode de réalisation se distingue du premier en ce que la résistance R et l'interrupteur 40 sont reliés en série entre les deux bornes de l'antenne 6 et les deux bornes d'entrée d'un circuit d'alimentation classique 8c. Ceci revient également à varier l'impédance équivalente de l'unité électronique du transpondeur en variant sa résistance équivalente. A nouveau, la valeur de la résistance R est choisie de manière que si l'interrupteur 40 est ouvert, il se produit une diminution de la tension aux bornes de l'antenne 6 à laquelle est associé, comme dans la premier mode de réalisation, un courant de perte. Ainsi, de manière similaire au premier mode de réalisation, la distance de communication maximale varie selon que l'interrupteur 40 est ouvert ou fermé, cette distance étant inférieure lorsque cet interrupteur est ouvert.

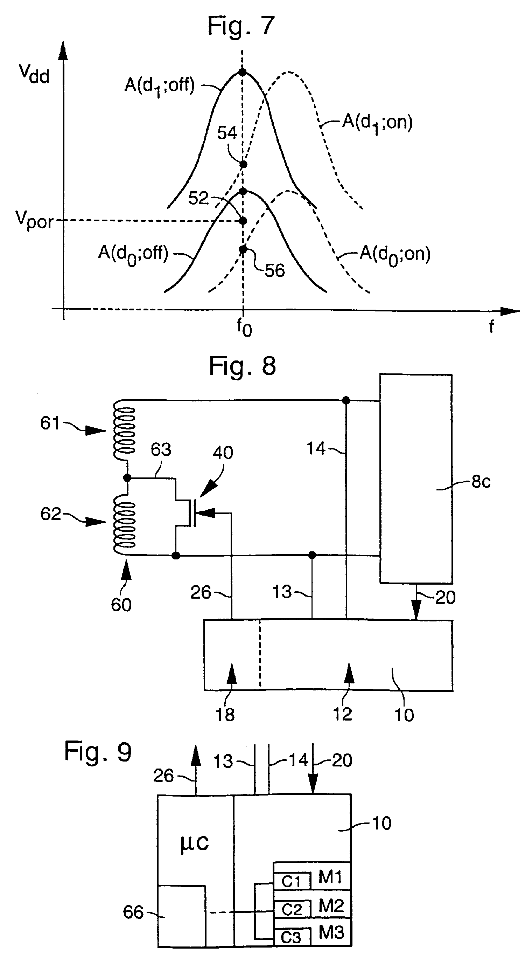

A l'aide des figures 6 et 7, on décrira ci-après un troisième mode de réalisation d'un transpondeur passif selon l'invention. En plus du circuit d'alimentation classique 8c et de la partie conventionnelle 12 du circuit 10, il est prévu selon l'invention d'agencer une capacité 46 d'accord de l'antenne 6 reliée en série à l'interrupteur 40 entre les deux bornes 48 et 49 de cette antenne. L'interrupteur 40 est comme dans le premier mode de réalisation commandé par la partie 18 du circuit 10 qui forme un circuit logique de gestion de la distance maximale de communication.

Sur la figure 7 sont représentés diverses courbes de résonance donnant l'amplitude de la tension d'alimentation Vdd en fonction de la fréquence F du signal électromagnétique d'activation de ce transpondeur fourni par un lecteur. Les deux courbes en trait plein correspondent à l'amplitude A de la tension d'alimentation lorsque l'interrupteur 40 est fermé, pour deux distances différentes D₀ et D₁. Ces deux courbes sont sensiblement centrées sur la fréquence F₀ du signal d'activation reçu par le transpondeur. La variation de la distance de communication engendre une variation de l'amplitude A, cette amplitude diminuant avec la distance (D₀ > D₁). Lorsque l'interrupteur 40 est ouvert, c'est-à-dire dans un état "ON", la réactance équivalente de l'unité électronique associée à l'antenne 6 est variée, dans le présent cas la capacité équivalente. Ceci a pour effet de déplacer en fréquence la courbe de résonance, comme cela est représenté à la figure 7 par les courbes en traits interrompus pour les distances de communication D₀ et D₁.

Le circuit d'alimentation 8c comprend de manière classique une unité POR décrite précédemment. Cette unité POR permet un fonctionnement du circuit électronique 10 seulement au-dessus d'un seuil de tension prédéfini Vpor. Lorsque l'interrupteur 40 est dans un état "OFF", c'est-à-dire fermé, une communication peut s'établir pour les deux distances D₀ et D₁, la distance maximum de communication étant supérieure à D₀. En effet, une communication peut s'établir tant que le sommet de la courbe de résonance est au-dessus du point 52, c'est-à-dire au-dessus de Vpor. Par contre, lorsque l'interrupteur 40 est dans un état "ON", c'est-à-dire ouvert, la réactance du système d'antenne du transpondeur varie engendrant un déplacement en fréquence, comme cela a été mentionné ci-avant. Dans ce cas, pour une fréquence d'activation F₀, l'amplitude de la tension d'alimentation correspond au point 54 supérieur au point 52 pour la distance D1 alors que pour la distance D₀, cette amplitude correspond au point 56 inférieur au point 52 et donc inférieur à la tension de seuil Vpor. Ainsi, il ressort clairement que la distance de communication diminue lorsque l'interrupteur 40 est ouvert. L'ouverture et la fermeture de cet interrupteur est donc effectuée en fonction de l'application sélectionnée ou activée, en relation avec le niveau de sécurité requis.

A la figure 8 est représenté un quatrième mode de réalisation qui se distingue des deux modes précédents en ce que l'action pour varier la distance de communication correspond à une variation des caractéristiques propres de l'antenne 60. Il est prévu des moyens pour varier l'impédance propre de l'antenne 60. Dans la variante représentée à la figure 8, l'antenne 60 se présente en deux parties 61 et 62 où la jonction de ces deux parties définit un point intermédiaire relié à l'autre borne de la partie 62 par une liaison électrique 64 sur laquelle est agencé un interrupteur 40. Ce dernier est commandé, comme dans les modes de réalisation précédents, par le circuit 18 de gestion de la distance maximale de communication. Lorsque l'interrupteur 40 est ouvert, la partie 62 de l'antenne 60 est court-circuitée. De ce fait, la tension et le courant fournis par l'antenne diminuent. Il en résulte pour les mêmes raisons que données précédemment une variation dans la tension d'alimentation fournie par le circuit 8c, ce qui varie la distance maximale de communication pour laquelle la tension d'alimentation atteint l'amplitude Vpor.

D'autres variantes de réalisation de transpondeurs passifs peuvent être conçues par l'homme du métier sans sortir du cadre de la présente invention, c'est-à-dire soit en agissant sur l'impédance équivalente de l'unité électronique, soit en agissant sur les caractéristiques électriques de l'antenne, notamment en variant la longueur de celle-ci et en particulier le nombre de spires.

A l'aide de la figure 9, on décrira schématiquement un mode d'agencement partiel du circuit électronique 10. Ce circuit comprend une partie mémoire dont diverses zones M1, M2 et M3 sont destinées à autant d'applications différentes. Dans chacune de ces zones mémoires est inscrit un code C1, C2 et respectivement C3 qui définit un code de sécurité pour l'application concernée et en particulier un code de distance maximale de communication avec un certain type de lecteur ou d'émetteur. Bien entendu, ces distances maximales varient en fonction de la puissance d'émission du signal électromagnétique d'activation. Lorsqu'une application est sélectionnée ou activée, un micro-contrôleur (ou circuit de commande) lit le code dans la zone mémoire correspondante et l'introduit dans une mémoire vive 66. Ce code détermine le signal de commande appliqué aux moyens de variation de la distance maximale de communication, en particulier à l'interrupteur 40 par la liaison électrique 26. Comme cela a déjà été mentionné, seules deux distances maximales différentes peuvent être prévues ou plus de deux distances maximales différentes peuvent être prévues en agençant une pluralité d'interrupteurs associés aux éléments variant soit l'impédance équivalente de l'unité électrique, soit les caractéristiques électriques de l'antenne.

Dans un autre système prévu, le code de sécurité est fourni au transpondeur par le lecteur ou l'émetteur lors de l'activation de chaque application associée à ce lecteur ou émetteur.

Alors que le premier mode de réalisation décrit ci-avant s'applique seulement aux transpondeurs passifs, les deuxième, troisième et quatrième modes de réalisation peuvent également s'appliquer de manière équivalente à des transpondeurs actifs. En effet, ces derniers modes de réalisation proposent d'agir au niveau des paramètres électriques du dispositif d'antenne en variant soit le gain d'antenne, soit l'accord de cette antenne ou encore en variant les dimensions de l'antenne, en particulier le nombre de spires actives. Ainsi, dans ces trois modes de réalisation, on varie la sensibilité de l'antenne à la réception d'un signal électromagnétique d'une fréquence déterminée ou d'une distribution en fréquence donnée.

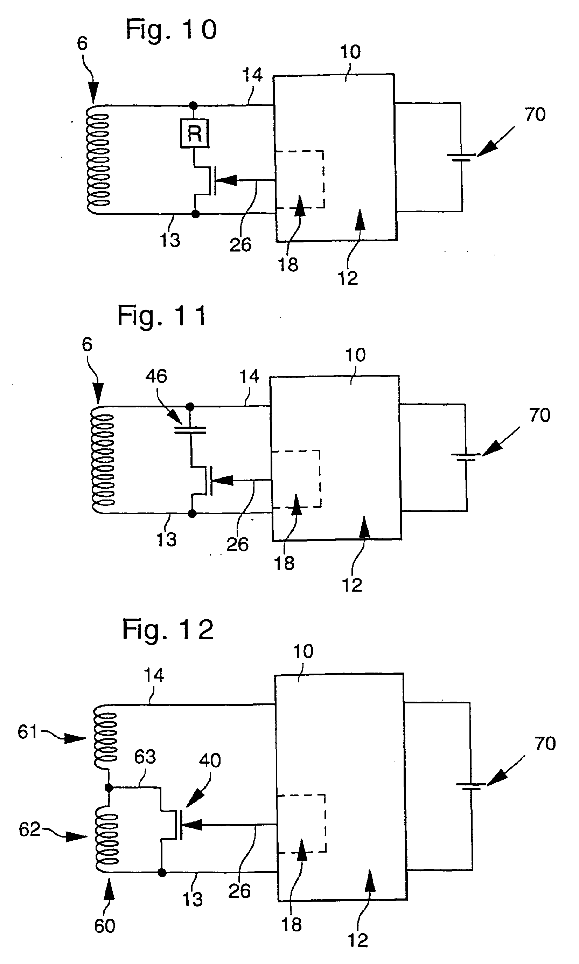

Sur les figures 10 à 12 sont représentés trois transpondeurs actifs, alimentés par une source d'énergie 70, correspondant respectivement aux deuxième, troisième et quatrième modes de réalisation décrits précédemment. On constate donc que l'alimentation 8c prévue dans le cas de transpondeurs passifs est simplement remplacée par une source d'énergie 70, notamment une pile, dans les réalisations de transpondeurs actifs.

Les transpondeurs actifs, représentés aux figures 10 à 12, permettent de varier la distance de réception de signaux électromagnétiques en fonction de l'application sélectionnée ou activée de la même manière que décrite ci-avant. De ce fait, les éléments déjà décrits et le fonctionnement des transpondeurs actifs des figures 10 à 12 ne sera pas décrit ici en détail.

Finalement, on notera que dans un autre mode de réalisation s'inspirant du quatrième mode de réalisation représentée aux figures 8 et 12, il est possible de prévoir deux antennes distinctes présentant des sensibilités différentes aux signaux électromagnétiques reçus, le circuit logique de gestion de la distance maximale de communication étant associée à des moyens de sélection permettant de sélectionner l'une ou l'autre des deux antennes en fonction de l'application sélectionnée ou activée. Cette solution augmente toutefois le coût et l'encombrement du transpondeur.

## Revendications

1. Transpondeur (2) comprenant une antenne (6; 60) et une unité électronique (8, 10) agencée de manière à gérer plusieurs applications différentes, **caractérisé en ce qu'**il comprend des moyens (18, 26, 40, R; 46; 63) pour varier la distance de communication maximale (D) à un lecteur (4) en fonction de l'application sélectionnée ou activée parmi lesdites applications différentes.

2. Transpondeur selon la revendication 1, **caractérisé en ce que** lesdits moyens pour varier la distance de communication maximale comprennent des moyens (18, 26, 40, R; 46) pour varier l'impédance équivalente de ladite unité électronique (8, 10).

3. Transpondeur selon la revendication 2, **caractérisé en ce que** lesdits moyens pour varier ladite impédance équivalente comprennent des moyens (18, 26, 40, R) pour varier la résistance équivalente de ladite unité électronique.

4. Transpondeur selon la revendication 3, alimenté en mode passif par un circuit d'alimentation (8) relié à ladite antenne et dans lequel est agencé un redresseur (30), **caractérisé en ce que** lesdits moyens pour varier ladite résistance équivalente sont formés par au moins une résistance (R) agencée en série avec un interrupteur (40) entre deux bornes dudit circuit d'alimentation situées après ledit redresseur relativement à ladite antenne, ces deux bornes ayant des potentiels électriques différents et par un circuit logique (18) de gestion de la distance maximale de communication qui commande ledit interrupteur en fonction de l'application sélectionnée ou activée.

5. Transpondeur selon la revendication 3, **caractérisé en ce que** lesdits moyens pour varier ladite résistance équivalente sont formés par au moins une résistance (R) agencée en série avec un interrupteur (40) entre les deux bornes de l'antenne (6) et par un circuit logique (18) de gestion de la distance maximale de communication qui commande ledit interrupteur en fonction de l'application sélectionnée ou activée.

6. Transpondeur selon la revendication 2 ou 3, **caractérisé en ce que** lesdits moyens pour varier ladite impédance équivalente comprennent des moyens (18, 26, 40, 46) pour varier la réactance équivalente de ladite unité électronique (8, 10).

7. Transpondeur selon la revendication 6, **caractérisé en ce que** lesdits moyens de pour varier ladite réactance équivalente sont formés par au moins une capacité (46) d'accord de ladite antenne, cette capacité étant agencée en série avec un interrupteur (40) entre les deux bornes de l'antenne (6) et par un circuit logique (18) de gestion de la distance maximale de communication qui commande ledit interrupteur en fonction de l'application sélectionnée ou activée.

8. Transpondeur selon la revendication 1, **caractérisé en ce que** lesdits moyens (63, 40) pour varier la distance de communication maximale comprennent des moyens pour varier les caractéristiques électriques de ladite antenne (60).

9. Transpondeur selon la revendication 8, **caractérisé en ce que** lesdits moyens pour varier les caractéristiques électriques de ladite antenne comprennent un interrupteur (40) dont les deux bornes sont respectivement reliées à une borne de ladite antenne et à un point intermédiaire de cette antenne de manière à varier sa longueur, notamment le nombre de spires, et un circuit logique (18) de gestion de ta distance maximale de communication qui commande ledit interrupteur en fonction de l'application sélectionnée ou activée.

10. Transpondeur selon l'une quelconque des revendications 4, 5, 7 et 9, **caractérisé en ce que** ladite unité électronique est agencée pour recevoir dans une zone mémoire (M1, M2, M3) plusieurs codes de distance (C1, C2, C3) associés respectivement aux plusieurs applications, ledit circuit logique de gestion de la distance maximale de communication étant agencé pour lire le code de distance associé à l'application sélectionnée ou activée et pour commander ledit interrupteur en fonction de ce code de distance.

## Claims

1. Transponder (2) including an antenna (6; 60) and an electronic unit (8; 10) arranged so as to control several different applications, **characterized in that** it includes means (18, 26, 40, R; 46; 63) for varying the maximum communication distance (D) with a reader (4) as a function of the application selected or activated from among said different applications.

2. Transponder according to claim 1, **characterized in that** said means for varying the maximum communication distance include means (18, 26, 40, R; 46) for varying the equivalent impedance of said electronic unit (8, 10).

3. Transponder according to claim 2, **characterized in that** said means for varying said equivalent impedance include means (18, 26, 40, R) for varying the equivalent resistance of said electronic unit.

4. Transponder according to claim 3, powered in passive mode by a power supply circuit (8) connected to said antenna and wherein is arranged a rectifier (30), **characterized in that** said means for varying said equivalent resistance are formed by at least one resistor (R) arranged in series with a switch (40) between two terminals of said power supply circuit located after said rectifier in relation to said antenna, these two terminals having different electric potentials and by a logic circuit (18) for controlling the maximum communication distance which controls said switch as a function of the application selected or activated.

5. Transponder according to claim 3, **characterized in that** said means for varying said equivalent resistance are formed by at least one resistor (R) arranged in series with a switch (40) between the two terminals of the antenna (6) and by a logic circuit (18) for controlling the maximum communication distance which controls said switch as a function of the application selected or activated.

6. Transponder according to claim 2 or 3, **characterized in that** said means for varying said equivalent impedance include means (18, 26, 40, 46) for varying the equivalent reactance of said electronic unit (8, 10).

7. Transponder according to claim 6, **characterized in that** said means for varying said equivalent reactance are formed by at least one tuning capacitance (46) of said antenna, this capacitance being arranged in series with a switch (40) between the two terminals of the antenna (6) and by a logic circuit (18) for controlling the maximum communication distance which controls said switch as a function of the application selected or activated.

8. Transponder according to claim 1, **characterized in that** said means (63, 40) for varying the maximum communication distance include means for varying the electric characteristics of said antenna (60).

9. Transponder according to claim 8, **characterized in that** said means for varying the electric characteristics of said antenna include a switch (40) whose two terminals are respectively connected to a terminal of said antenna and to an intermediate point of this antenna so as to vary its length, in particular the number of turns, and a logic circuit (18) for controlling the maximum communication distance which controls said switch as a function of the application selected or activated.

10. Transponder according to any one of claims 4, 5, 7 and 9, **characterized in that** said electronic unit is arranged to receive in a memory zone (M1, M2, M3) several distance codes (C1, C2, C3) associated respectively with several applications, said logic circuit for controlling the maximum communication distance being arranged to read the distance code associated with the application selected or activated and to control said switch as a function of said distance code.

## Patentansprüche

1. Transponder (2), umfassend eine Antenne (6; 60) und eine Elektronikeinheit (8, 10), die derart angeordnet ist, dass sie mehrere unterschiedliche Anwendungen steuert, **dadurch gekennzeichnet, dass** er Mittel (18, 26, 40, R; 46; 63) umfasst, um die maximale Kommunikationsdistanz (D) zu einem Leser (4) in Abhängigkeit von der ausgewählten oder aktivierten Anwendung unter den unterschiedlichen Anwendungen zu variieren.

2. Transponder nach Anspruch 1, **dadurch gekennzeichnet, dass** die Mittel, um die maximale Kommunikationsdistanz zu variieren, Mittel (18, 26, 40, R; 46) umfassen, um die äquivalente Impedanz der Elektronikeinheit (8, 10) zu variieren.

3. Transponder nach Anspruch 2, **dadurch gekennzeichnet, dass** die Mittel, um die äquivalente Impedanz zu variieren, Mittel (18, 26, 40, R) umfassen, um den äquivalenten Widerstand der Elektronikeinheit zu variieren.

4. Transponder nach Anspruch 3, der im Passivmodus von einer Versorgungsschaltung (8) gespeist wird, die mit der Antenne verbunden und in der ein Gleichrichter (30) angeordnet ist, **dadurch gekennzeichnet, dass** die Mittel, um den äquivalenten Widerstand zu variieren, von mindestens einem Widerstand (R), der in Serie mit einem Schalter (40) zwischen zwei Klemmen der Versorgungsschaltung angeordnet ist, die sich nach dem Gleichrichter in Bezug zur Antenne befinden, wobei diese beiden Klemmen unterschiedliche elektrische Potentiale haben, und von einer logischen Schaltung (18) zur Steuerung der maximalen Kommunikationsdistanz gebildet sind, die den Schalter in Abhängigkeit von der ausgewählten oder aktivierten Anwendung steuert.

5. Transponder nach Anspruch 3, **dadurch gekennzeichnet, dass** die Mittel, um den äquivalenten Widerstand zu variieren, von mindestens einem Widerstand (R), der in Serie mit einem Schalter (40) zwischen den Klemmen der Antenne (6) angeordnet ist, und von einer logischen Schaltung (18) zur Steuerung der maximalen Kommunikationsdistanz gebildet sind, die den Schalter in Abhängigkeit von der ausgewählten oder aktivierten Anwendung steuert.

6. Transponder nach Anspruch 2 oder 3, **dadurch gekennzeichnet, dass** die Mittel, um die äquivalente Impedanz zu variieren, Mittel (18, 26, 40, 46) umfassen, um die äquivalente Reaktanz der Elektronikeinheit (8, 10) zu variieren.

7. Transponder nach Anspruch 6, **dadurch gekennzeichnet, dass** die Mittel, um die äquivalente Reaktanz zu variieren, von mindestens einer Übereinstimmungskapazität (46) der Antenne gebildet sind, wobei diese Kapazität in Serie mit einem Schalter (40) zwischen den beiden Klemmen der Antenne (6) angeordnet ist, und von einer logischen Schaltung (18) zur Steuerung der maximalen Kommunikationsdistanz gebildet ist, die den Schalter in Abhängigkeit von der ausgewählten oder aktivierten Anwendung steuert.

8. Transponder nach Anspruch 1, **dadurch gekennzeichnet, dass** die Mittel (63, 40), um die maximale Kommunikationsdistanz zu variieren, Mittel umfassen, um die elektrischen Merkmale der Antenne (60) zu variieren.

9. Transponder nach Anspruch 8, **dadurch gekennzeichnet, dass** die Mittel, um die elektrischen Merkmale der Antenne zu variieren, einen Schalter (40), dessen beiden Klemmen jeweils mit einer Klemme der Antenne und einem Zwischenpunkt dieser Antenne verbunden sind, um ihre Länge, insbesondere die Anzahl von Windungen, zu variieren, und eine logische Schaltung (18) zur Steuerung der maximalen Kommunikationsdistanz umfassen, die den Schalter in Abhängigkeit von der ausgewählten oder aktivierten Anwendung steuert.

10. Transponder nach einem der Ansprüche 4, 5, 7 und 9, **dadurch gekennzeichnet, dass** die Elektronikeinheit derart angeordnet ist, dass sie in einer Speicherzone (M1, M2, M3) mehrere Distanzcodes (C1, C2, C3) aufnimmt, die jeweils den verschiedenen Anwendungen zugeordnet sind, wobei die logische Schaltung zur Steuerung der maximalen Kommunikationsdistanz derart angeordnet ist, dass sie den Distanzcode abliest, der der ausgewählten oder aktivierten Anwendung zugeordnet ist, und dass sie den Schalter in Abhängigkeit von diesem Distanzcode steuert.
